(19) **Europäisches Patentamt / European Patent Office / Office européen des brevets**

(11) **EP 4 195 352 A1**

(12) # EUROPEAN PATENT APPLICATION
published in accordance with Art. 153(4) EPC

(43) Date of publication:
**14.06.2023 Bulletin 2023/24**

(21) Application number: **21939595.1**

(22) Date of filing: **15.10.2021**

(51) International Patent Classification (IPC):
**H01M 10/0587** (2010.01)  **H01M 10/04** (2006.01)

(86) International application number:
**PCT/CN2021/123970**

(87) International publication number:
**WO 2023/060529 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Fujian 352100 (CN)**

(72) Inventors:
• **GUO, Suogang**
**Ningde City, Fujian 352100 (CN)**

• **FU, Chenghua**
**Ningde City, Fujian 352100 (CN)**
• **ZHANG, Chenchen**
**Ningde City, Fujian 352100 (CN)**
• **YE, Yonghuang**
**Ningde City, Fujian 352100 (CN)**

(74) Representative: **Behr, Wolfgang**
**Lorenz Seidler Gossel**
**Rechtsanwälte Patentanwälte**
**Partnerschaft mbB**
**Widenmayerstraße 23**
**80538 München (DE)**

(54) **LITHIUM ION BATTERY**

(57) Provided in the present application is a lithium-ion battery, comprising a wound structure formed by winding a negative electrode plate, a separator and a positive electrode plate in a winding direction, the wound structure comprising an arc-shaped bending part, wherein the negative electrode plate comprises a negative electrode material layer, and an insulation layer and a reaction layer located on a surface of the insulation layer are provided on a surface of the negative electrode material layer in the bending part, the reaction layer comprising a lithium storage material.

*FIG. 1*

EP 4 195 352 A1

**Description**

**Technical Field**

The present application relates to the technical field of lithium-ion batteries, and in particular relates to a lithium-ion battery, and a battery module, a battery pack and a power consuming device comprising the lithium-ion battery.

**Background Art**

Lithium-ion batteries have advantages such as high energy density, high cycle performance, high voltage, low self-discharge and light weight, and are widely used in portable electronic products such as laptop computers, digital cameras, mobile phones and watches. With the wide application of various portable electronic products, people have higher and higher requirements on the performance of lithium-ion batteries, especially the energy density and cycle performance of the lithium-ion batteries.

Current lithium-ion batteries are usually designed in a wound structure. During the cycle process of a battery, the intercalation and de-intercalation of lithium ions may occur between a positive electrode and a negative electrode of the battery. During the migration of the lithium ions from the positive electrode to the negative electrode, since in a bending part of a cell, there is a gap in an inner ring due to the limitation of a wound structure of the battery, such that the capacity ratio of the negative electrode to the positive electrode of the battery is lower than in other positions in the cell, there are too many lithium ions from the positive electrode to be intercalated into the negative electrode, and the negative electrode has no enough capacity for the intercalation of lithium ions, causing the excess lithium ions to precipitate in an area of the negative electrode in the inner ring wrapped by the positive electrode. The lithium precipitation in the negative electrode will seriously degrade the cycle performance of the battery.

Lithium thus-precipitated forms into a dendritic morphology, which may puncture a separator and connect the positive and negative electrodes, to cause a short circuit, resulting in a serious safety accident.

**Summary of the Invention**

The invention has been made in view of the above issues, and an objective of the invention is to provide a lithium-ion battery, which can eliminate lithium dendrites generated in an electrode plate of a wound-type cell, especially in a bending part, improve the problem of lithium precipitation at the corner of the cell, and improve the cycle performance and safety of the lithium-ion battery.

To achieve the above objective, a first aspect of the present application provides a lithium-ion battery, comprising a wound structure formed by winding a negative electrode plate, a separator and a positive electrode plate in a winding direction, the wound structure comprising an arc-shaped bending part, wherein the negative electrode plate comprises a negative electrode material layer, and an insulation layer and a reaction layer located on a surface of the insulation layer are provided on a surface of the negative electrode material layer in the bending part, the reaction layer comprising a lithium storage material.

By providing the insulation layer and the reaction layer located on the surface of the insulation layer on the surface of the negative electrode material layer, the insulation layer enables physical isolation of lithium dendrites, and even when the insulation layer is punctured by the lithium dendrites, the reaction layer on the surface of the insulation layer can react with the lithium dendrites, thus eliminating the lithium dendrites.

In some embodiments, the thickness d of the reaction layer satisfies that:

$$q \times \frac{(x + h_2 + h_3) - h_1}{h_1 \times m_1 \times \rho \times a} \times 10000 - 15 \le d \quad ,$$

preferably, the thickness d of the reaction layer satisfies that:

$$q \times \frac{(x + h_2 + h_3) - h_1}{h_1 \times m_1 \times \rho \times a} \times 10000 - 10 \le d \quad ,$$

and more preferably, the thickness d of the reaction layer satisfies that:

$$q \times \frac{(x + h_2 + h_3) - h_1}{h_1 \times m_1 \times \rho \times a} \times 10000 - 10 \leq d$$
$$\leq q \times \frac{(x + h_2 + h_3) - h_1}{h_1 \times m_1 \times \rho \times a} \times 10000 + 80 \quad ,$$

where,

$h_1$: the thickness of a single layer of the negative electrode material layer, in $\mu$m;
$h_2$: the thickness of a single layer of the positive electrode material layer, in $\mu$m;
$h_3$: the thickness of the separator, in $\mu$m;
x: the distance between the negative electrode material layer and the positive electrode material layer in the bending part, in $\mu$m;
q: the capacity of a single layer of the negative electrode active material layer in the bending part, in mAh;
a: the area of a single layer of the negative electrode active material layer in the bending part, in $cm^2$;
$m_1$: the gram capacity of the reaction layer, in mAh/g;
$\rho$: the density of the reaction layer, in $g/cm^3$;
d: in $\mu$m.

By satisfying the thickness of the reaction layer with the above relationships, the reaction layer is enabled to sufficiently react with the lithium dendrites which puncture and pass through the insulation layer, thus improving the cycle performance and safety of the lithium-ion battery.

In some embodiments, the lithium storage material comprises at least one of graphite (which may be artificial graphite or natural graphite), elemental silicon, silicon oxide, silicon suboxide, tin oxide, copper oxide and zinc oxide.

By using such a reaction layer, when the insulation layer is punctured by the lithium dendrites, the lithium dendrites can well react with the reaction layer, eliminating the lithium dendrites, and thereby improving the safety of the battery.

In some embodiments, the insulation layer comprises at least one of aluminum oxide, boehmite, zirconium oxide, titanium oxide, magnesium oxide, lithium oxide, silicon oxide, cobalt oxide, nickel oxide, zinc oxide, gallium oxide, germanium oxide, yttrium oxide, strontium oxide, barium oxide, and molybdenum oxide.

By using such an insulation layer, a barrier can be formed physically, to inhibit the growth of the lithium dendrites.

In some embodiments, the thickness of the insulation layer is 1 to 10 $\mu$m, and preferably, 2 to 4 $\mu$m.

Technically, it is difficult to achieve the thickness of the insulation layer of less than 1 $\mu$m. The upper limit of the thickness of the insulation layer is not particularly limited, and from the viewpoint of cost, the upper limit can be set to 10 $\mu$m, at which point, the role of physically isolating the lithium dendrites can be fully exerted.

In some embodiments, the Young's modulus of the insulation layer is greater than or equal to 6 GPa, and preferably, 6 to 30 GPa.

By making the Young's modulus of the insulation layer greater than or equal to 6 GPa, the role of physically isolating the lithium dendrites can be fully exerted.

In some embodiments, the gram capacity of the reaction layer is 300 to 5000 mAh/g, and preferably, 1000 to 4000 mAh/g.

By making the gram capacity of the reaction layer be 300 to 5000 mAh/g, the lithium dendrites can be better absorbed, and the volume occupied by the reaction layer can be reduced.

In some embodiments, the particle size of the reaction layer is 0.1 to 6 $\mu$m, and preferably, 0.1 to 2 $\mu$m, and the particle size of the insulation layer is 0.1 to 10 $\mu$m, and preferably, 0.1 to 4 $\mu$m.

By making the particle size of the reaction layer be 0.1 to 6 $\mu$m and the particle size of the insulation layer be 0.1 to 10 $\mu$m, the respective layers can be uniformly formed, and thus the respective roles of preventing lithium precipitation of the reaction layer and the insulation layer can be better exerted.

A second aspect of the present application provides a battery module comprising the lithium-ion battery of the first aspect of the present application.

A third aspect of the present application provides a battery pack comprising the battery module of the second aspect of the present application.

A fourth aspect of the present application provides a power consuming device comprising at least one selected from the lithium-ion battery of the first aspect of the present application, the battery module of the second aspect of the present application, or the battery pack of the third aspect of the present application.

According to the invention, the separator being punctured due to the formation of the lithium dendrites at the bend of the wound structure and thus causing a short-circuit failure of the battery can be prevented. When the lithium dendrites are formed at the bend of the wound structure, the insulation layer can form a barrier physically to inhibit the growth of the lithium dendrites. When the amount of the released lithium is too large and the lithium dendrites grow further and puncture the insulation layer, the reaction layer can react with and ablate some of the lithium dendrites which pass through the insulation layer, and thus, the cycle performance and safety of the lithium-ion battery can be improved.

**Brief Description of the Drawings**

Fig. 1 is a schematic diagram of a wound-type battery assembly of a lithium-ion battery in an embodiment of the present application.
Fig. 2 is a diagram of an enlarged representation of a bending part of the battery assembly in an embodiment of the present application.
Fig. 3 is a schematic diagram of a lithium-ion battery in an embodiment of the present application.
Fig. 4 is an exploded view of the lithium-ion battery in the embodiment of the present application shown in Fig. 3.
Fig. 5 is a schematic diagram of a battery module in an embodiment of the present application.
Fig. 6 is a schematic diagram of a battery pack in an embodiment of the present application.
Fig. 7 is an exploded view of the battery pack in the embodiment of the present application shown in Fig. 6.
Fig. 8 is a schematic diagram of a power consuming device using a lithium-ion battery in an embodiment of the present application as a power source.
Fig. 9A is an electron micrograph of a bending part after 500 cycles of a lithium-ion battery in Test Example 1 of the present application; and Fig. 9B is an electron micrograph of a bending part after 500 cycles of a lithium-ion battery in Comparative test example 1.
Fig. 10A is a picture of the sites of a reaction layer and an insulation layer observed using an in-situ microscope after 1 cycle of a lithium-ion battery in Test Example 2 of the present application; Fig. 10B is a picture after 10 cycles; and Fig. 10C is a picture after 100 cycles.

List of reference numerals:

A: bending part; B: planar part; 101: positive electrode plate; 102: negative electrode plate; 103: separator; 104: reaction layer; 106: insulation layer; x: distance between the negative electrode material layer and the positive electrode material layer in the bending part; 1: battery pack; 2: upper box body; 3: lower box body; 4: battery module; 5: lithium-ion battery; 51: housing; 52: electrode assembly; 53: top cover assembly.

**Detailed Description of Embodiments**

Hereafter, embodiments of a lithium-ion battery and a method for manufacturing the same, and a battery module, a battery pack and a power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60 to 120 and 80 to 110 are listed for a particular parameter, it should be understood that the ranges of 60 to 110 and 80 to 120 are also contemplated. In addition, if minimum range values 1 and 2 are listed, and maximum range values 3, 4, and 5 are listed, the following ranges are all contemplated: 1 to 3, 1 to 4, 1 to 5, 2 to 3, 2 to 4 and 2 to 5. In the present application, unless stated otherwise, the numerical range "a to b" denotes an abbreviated representation of any combination of real numbers between a and b, where both a and b are real numbers. For example, the numerical range "0 to 5" means that all real numbers between "0 to 5" have been listed herein, and "0 to 5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless stated otherwise, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

A first aspect of the present application provides a lithium-ion battery. The lithium-ion battery of the present application comprises a wound structure formed by winding a negative electrode plate, a separator and a positive electrode plate in a winding direction, the wound structure comprising an arc-shaped bending part, wherein the negative electrode plate comprises a negative electrode material layer, and an insulation layer and a reaction layer located on a surface of the insulation layer are provided on a surface of the negative electrode material layer in the bending part, the reaction layer comprising a lithium storage material.

When the lithium-ion battery is of a wound structure, the lithium precipitation is prone to occur due to a gap in an arc-shaped bending part of the wound structure, and the lithium dendrites formed by lithium thus-precipitated may overgrow and puncture the separator. In the lithium-ion battery of the present application, by providing an insulation layer on the surface of the negative electrode material layer in the bending part, the insulation layer can isolate the lithium dendrites physically, to inhibit the growth of the lithium dendrites and prevent the lithium dendrites from puncturing the separator. By further providing a reaction layer on a surface of the insulation layer, when the lithium dendrites overgrow to puncture the insulation layer, the reaction layer can react with the lithium dendrites, thus eliminating the lithium dendrites, which can further prevent the lithium dendrites from puncturing the separator.

The thickness d of the reaction layer satisfies that:

$$q \times \frac{(x + h_2 + h_3) - h_1}{h_1 \times m_1 \times \rho \times a} \times 10000 - 15 \le d \quad,$$

where, $h_1$: the thickness of a single layer of the negative electrode material layer, in $\mu$m;

$h_2$: the thickness of a single layer of the positive electrode material layer, in $\mu$m;
$h_3$: the thickness of the separator, in $\mu$m;
x: the distance between the negative electrode material layer and the positive electrode material layer in the bending part, in $\mu$m;
q: the capacity of a single layer of the negative electrode active material layer in the bending part, in mAh;
a: the area of a single layer of the negative electrode active material layer in the bending part, in cm$^2$;
$m_1$: the gram capacity of the reaction layer, in mAh/g;
$\rho$: the density of the reaction layer, in g/cm$^3$;
d: in $\mu$m.

By satisfying the thickness of the reaction layer with the above relationship, the reaction layer is enabled to sufficiently react with the lithium dendrites which puncture the insulation layer and pass through the insulation layer, thus improving the cycle performance and safety of the lithium-ion battery.

More preferably, the thickness d of the reaction layer satisfies that:

$$q \times \frac{(x + h_2 + h_3) - h_1}{h_1 \times m_1 \times \rho \times a} \times 10000 - 10 \le d \quad.$$

Further more preferably, the thickness d of the reaction layer satisfies that:

$$q \times \frac{(x + h_2 + h_3) - h_1}{h_1 \times m_1 \times \rho \times a} \times 10000 - 10 \leq d$$
$$\leq q \times \frac{(x + h_2 + h_3) - h_1}{h_1 \times m_1 \times \rho \times a} \times 10000 + 80$$

.

In addition, from the viewpoints of coating process and cost, it is preferred that the upper limit of the thickness of the reaction layer is 200 $\mu$m.

The lithium storage material that can be used in the reaction layer may be any material, as long as it can chemically react with the lithium dendrites, so as to prevent the lithium dendrites from puncturing the separator, and for example, the same active material as in the negative electrode material layer may be used. Examples of such a material that can react with the lithium dendrites may be for example at least one of graphite, elemental silicon, silicon oxide, silicon suboxide, tin oxide, copper oxide and zinc oxide. Herein, it is preferred to use a material that can reversibly react with the lithium dendrites, for example, preferably graphite, elemental silicon, silicon oxide or silicon suboxide, and particularly preferably elemental silicon or silicon suboxide. In addition, since the proportion of the lithium ions in the whole battery which form the lithium dendrites puncturing and passing through the insulation layer to be ablated by the reaction layer is not too much, even if the reaction layer is a material that irreversibly reacts with the lithium dendrites, it will have little effect on the capacity. Examples of such an irreversible material may be for example tin oxide, copper oxide, zinc oxide, etc., which can form LiM alloys with lithium metal, thus contributing to better deposition of lithium.

By using such a reaction layer, when the insulation layer is punctured by the lithium dendrites and the lithium dendrites pass through the insulation layer, the lithium dendrites can well react with the reaction layer, eliminating the lithium dendrites, and thereby improving the safety of the battery.

The insulation layer that can be used in the lithium-ion battery of the present application may comprise at least one of aluminum oxide, boehmite, zirconium oxide, titanium oxide, magnesium oxide, lithium oxide, silicon oxide, cobalt oxide, nickel oxide, zinc oxide, gallium oxide, germanium oxide, yttrium oxide, strontium oxide, barium oxide, and molybdenum oxide. It is preferred to comprise boehmite, aluminum oxide or zirconium oxide.

By using such an insulation layer, a barrier can be formed physically, to inhibit the growth of the lithium dendrites and prevent the lithium dendrites generated in the use of a battery from puncturing the separator, thereby improving the safety of the lithium-ion battery.

The thickness of the insulation layer is 1 to 10 $\mu$m, and preferably, 2 to 4 $\mu$m.

Technically, it is difficult to achieve the thickness of the insulation layer of less than 1 $\mu$m. The upper limit of the thickness of the insulation layer is not particularly limited, and from the viewpoint of cost, the upper limit can be set to 10 $\mu$m, at which point, the role of physically isolating the lithium dendrites can be fully exerted.

The Young's modulus of the insulation layer is greater than or equal to 6 GPa, and preferably, 6 to 30 GPa.

By making the Young's modulus of the insulation layer greater than or equal to 6 GPa, the role of physically isolating the lithium dendrites can be fully exerted.

The gram capacity of the reaction layer is 300 to 5000 mAh/g, and preferably, 1000 to 4000 mAh/g.

By making the gram capacity of the reaction layer be 300 to 5000 mAh/g, the reaction layer can better react with the lithium dendrites, thus eliminating the lithium dendrites, and the volume occupied by the reaction layer is reduced.

The particle size of the reaction layer is 0.1 to 6 $\mu$m, and preferably, 0.1 to 2 $\mu$m, and the particle size of the insulation layer is 0.1 to 10 $\mu$m, and preferably, 0.1 to 5$\mu$m.

By making the particle size of the reaction layer be 0.1 to 6 $\mu$m and the particle size of the insulation layer be 0.1 to 10 $\mu$m, the respective layers can be uniformly formed, and thus the respective roles of preventing lithium precipitation of the reaction layer and the insulation layer can be better exerted.

A second aspect of the present application provides a battery module comprising the lithium-ion battery of the first aspect of the present application.

A third aspect of the present application provides a battery pack comprising the battery module of the second aspect of the present application.

A fourth aspect of the present application provides a power consuming device comprising at least one selected from the lithium-ion battery of the first aspect of the present application, the battery module of the second aspect of the present application, or the battery pack of the third aspect of the present application.

In addition, the lithium-ion battery, battery module, battery pack, and power consuming device of the present application will be described below by appropriately referring to the accompanying drawings.

In an embodiment of the present application, a lithium-ion battery is provided.

The lithium-ion battery comprises a positive electrode plate, a negative electrode plate, an electrolyte and a separator. During the charge/discharge process of the battery, active ions are intercalated and de-intercalated back and forth between the positive electrode plate and the negative electrode plate. The electrolyte is located between the positive electrode plate and the negative electrode plate and functions for ionic conduction. The separator is provided between the positive electrode plate and the negative electrode plate, and mainly prevents the positive and negative electrodes from short-circuiting and enables ions to pass through.

[Positive electrode plate]

The positive electrode plate comprises a positive electrode current collector and a positive electrode material layer provided on at least one surface of the positive electrode current collector.

As an example, the positive electrode current collector has two surfaces opposite in its own thickness direction, and the positive electrode material layer is provided on either or both of the two opposite surfaces of the positive electrode current collector.

In some embodiments, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a positive electrode active material for batteries well known in the art can be used in the positive electrode material layer. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites.

In some embodiments, the positive electrode material layer may also optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode material layer may also optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: the above-mentioned components for preparing the positive electrode plate, for example, positive electrode active material, conductive agent, binder and any other components, are dispersed in a solvent (e.g. N-methylpyrrolidone) to form a positive electrode slurry; and the positive electrode slurry is coated onto a positive electrode current collector, and is then subjected to procedures such as drying and cold pressing, so as to obtain the positive electrode plate.

[Negative electrode plate]

The negative electrode plate comprises a negative electrode current collector and a negative electrode material layer provided on at least one surface of the negative electrode current collector.

As an example, the negative electrode current collector has two opposite surfaces in its own thickness direction, and the negative electrode material layer is provided on either or both of the two opposite surfaces of the negative electrode current collector.

An insulation layer and a reaction layer located on a surface of the insulation layer are provided on a surface of the negative electrode material layer in the bending part.

As an example, the insulation layer and the reaction layer are located on a surface of the negative electrode material layer that faces the outside after winding.

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for batteries well known in the art can be used in the negative electrode material layer. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides (silicon oxide, silicon suboxide, etc.), silicon carbon composites, silicon nitrogen composites and silicon alloys. The tin-based material may be selected from at least one of elemental tin, tin oxides (tin oxide) and tin alloys. However, the present application is not limited to these materials, and other conventional materials that can be used as negative electrode active materials for batteries can also be used. These negative electrode active materials may be used alone or in combination of two or more.

In some embodiments, the negative electrode material layer may also optionally comprise a binder. The binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode material layer may also optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode material layer may also optionally comprise other auxiliary agents, such as thickener (e.g., sodium carboxymethyl cellulose (CMC-Na)) and the like.

In some embodiments, a dispersant may also be used in preparing the negative electrode material layer. The dispersant is used to improve the dispersion uniformity and coating property, and can be a commonly used dispersant in the battery field, for example, a polymer dispersant. The polymer dispersant can be polyvinyl alcohol, modified polyvinyl alcohol having functional groups other than hydroxyl group, for example, acetyl group, sulfo group, carboxyl group, carbonyl group, amino group, polyvinyl alcohol-based resins modified with various salts, modified with anions or cations, and acetal-modified with aldehydes, or various (meth)acrylic-based polymers, polymers derived from ethylenically unsaturated hydrocarbons, cellulose-based resins, etc., or copolymers thereof, but is not limited to these. The polymer dispersant may be used alone or in combination of two or more.

In some embodiments, at least one material of graphite, silicon oxide, silicon suboxide, tin oxide, copper oxide and zinc oxide may be used in the reaction layer.

In some embodiments, the insulation layer may comprise at least one material of aluminum oxide, boehmite, zirconium oxide, titanium oxide, magnesium oxide, lithium oxide, silicon oxide, cobalt oxide, nickel oxide, zinc oxide, gallium oxide, germanium oxide, yttrium oxide, strontium oxide, barium oxide, and molybdenum oxide.

In some embodiments, the negative electrode plate can be prepared as follows: the above components for preparing the negative electrode plate, such as a negative electrode active material, a conductive agent, a binder and any other component, are dispersed in a solvent (e.g., deionized water) to form a slurry for negative electrode material layer; the above materials for forming the insulation layer, and a dispersant, a binder and any other component, are dispersed in a solvent (e.g., deionized water) to form a slurry for insulation layer, wherein the dispersant and the binder may be the materials listed above; the above materials for forming the reaction layer, and a dispersant, a binder and any other component, are dispersed in a solvent (e.g., deionized water) to form a slurry for reaction layer, wherein the dispersant and the binder may be the materials listed above; and the negative electrode slurry is coated onto the negative electrode current collector and dried, and then the slurry for insulation layer and the slurry for reaction layer are applied sequentially at the position of the bending part calculated according to the winding method, and subjected to procedures such as drying and cold pressing, to obtain the negative electrode plate.

Herein, the slurry for insulation layer and the slurry for reaction layer can be coated by an one-step forming coating process or a two-step coating process. In the one-step forming coating process, for example, in a double gravure coating device installed in an extrusion coater, the slurry for insulation layer and the slurry for reaction layer are loaded into the coating device along with the slurry for negative electrode material layer, where the slurry for negative electrode material layer is subjected to continuous extrusion coating, and the slurry for insulation layer and the slurry for reaction layer are subjected to intermittent gravure coating. In the two-step coating process, after the negative electrode material layer is formed on the negative electrode plate, the position of the bending part is determined, and when passing through the bending part, coating is carried out by means of two-step gravure coating using a gravure roller.

[Electrolyte]

The electrolyte is located between the positive electrode plate and the negative electrode plate and functions for ionic conduction. The type of the electrolyte is not specifically limited in the present application, and can be selected according to actual requirements. For example, the electrolyte may be liquid, gel or all solid.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may also optionally comprise an additive. For example, the additive can include a negative electrode film-forming additive, a positive electrode film-forming additive, and also an additive that can improve certain performances of the battery, such as an additive that improve the overcharge performance of the battery, or an additive that improve the high temperature performance or low-temperature performance of the battery.

[Separator]

In the present application, the lithium-ion battery also comprises a separator, wherein the positive electrode plate, the negative electrode plate and the separator are made into an electrode assembly having a wound structure by a winding process. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, the lithium-ion battery may comprise an outer package. The outer package can be used to encapsulate the above-mentioned electrode assembly and electrolyte.

In some embodiments, the outer package of the lithium-ion battery may be a hard shell, for example, a hard plastic shell, an aluminum shell, a steel shell, etc. The outer package of the lithium-ion battery may also be a soft bag, such as a pouch-type soft bag. The material of the soft bag may be plastics, and the examples of plastics may include polypropylene, polybutylene terephthalate, and polybutylene succinate, etc.

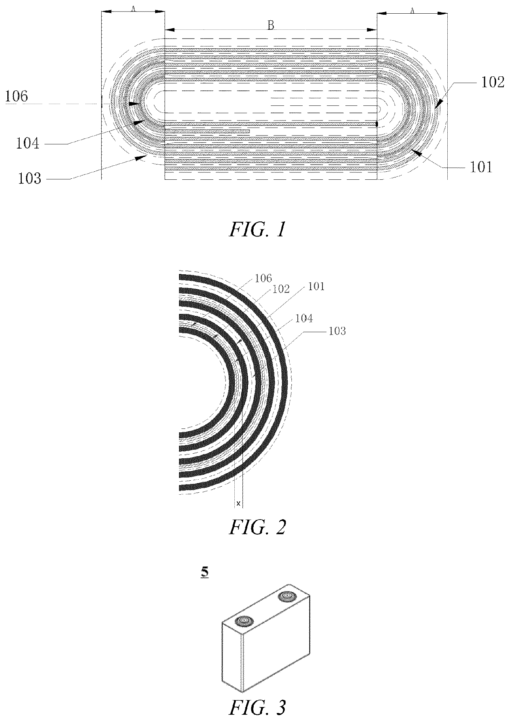

Fig. 1 is a schematic diagram of a wound-type battery assembly of a lithium-ion battery in an embodiment of the present application. As shown in Fig. 1, a negative electrode plate 102, a separator 103 and a positive electrode plate 101 are wound into a wound structure in a winding direction, the wound structure comprising a bending part A and a planar part B. In Fig. 1, in the bending part A, an insulation layer 106 is provided on a surface of a negative electrode material layer of the negative electrode plate 102 that faces the outside, and a reaction layer 104 is provided on an outer surface of the insulation layer 106.

Fig. 2 is a diagram of an enlarged representation of a bending part of a cell in an embodiment of the present application. As shown in Fig. 2, in the bending part, there is a gap, indicated by x, between the negative electrode material layer and a positive electrode material layer which is located outside the negative electrode material layer separated from the same by the separator.

The shape of the lithium-ion battery is not particularly limited in the present application, and can be a cylindrical shape, a square shape or any other shape. For example, Fig. 3 shows a lithium-ion battery 5 with a square structure as an example.

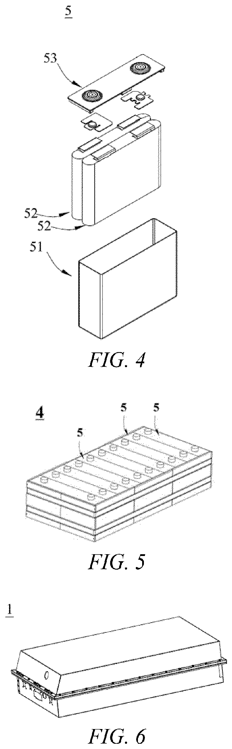

In some embodiments, referring to Fig. 4, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can form an electrode assembly 52 by a winding process or a lamination process. The electrode assembly 52 is encapsulated in the accommodating cavity. An electrolyte solution is infiltrated into the electrode assembly 52. The number of the electrode assemblies 52 contained in the lithium-ion battery 5 may be one or more, and can be selected by those skilled in the art according to specific actual requirements.

In some embodiments, a lithium-ion battery can be assembled into a battery module, and the number of the lithium-ion batteries contained in the battery module may be one or more, and the specific number can be selected by those skilled in the art according to the application and capacity of the battery module.

Fig. 5 shows a battery module 4 as an example. Referring to Fig. 5, in the battery module 4, a plurality of lithium-ion batteries 5 may be arranged in sequence in the length direction of the battery module 4. Apparently, the secondary batteries may also be arranged in any other manner. Further, the plurality of lithium-ion batteries 5 may be fixed by fasteners.

Optionally, the battery module 4 may also comprise a housing with an accommodating space, and the plurality of lithium-ion batteries 5 are accommodated in the accommodating space.

In some embodiments, the above-mentioned battery module may also be assembled into a battery pack, the number of battery modules included in the battery pack may be one or more, and the specific number can be selected by those skilled in the art according to the application and capacity of the battery pack.

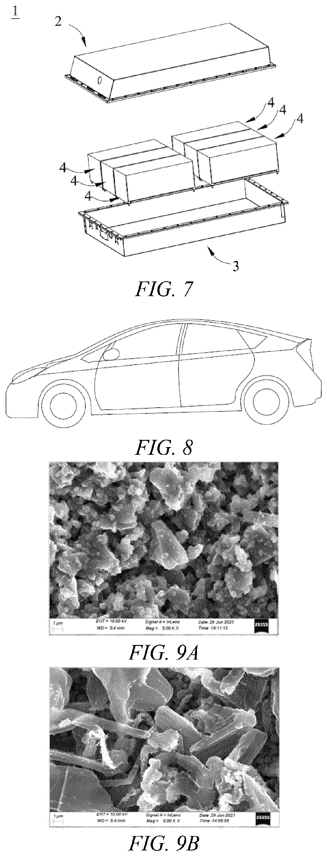

Fig. 6 and Fig. 7 show a battery pack 1 as an example. Referring to Fig. 6 and Fig. 7, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of battery modules 4 may be arranged in the battery box in any manner.

In addition, the present application also provides a power consuming device comprising at least one of the lithium-ion battery, battery module, or battery pack provided by the present application. The lithium-ion battery, battery module or battery pack may be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, and the like, but is not limited thereto.

For the power consuming device, the lithium-ion battery, battery module or battery pack can be selected according to the usage requirements thereof.

Fig. 8 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a lithium-ion battery, a battery pack or a battery module may be used.

As another example, the device may be a mobile phone, a tablet, a laptop computer, etc. The device is generally required to be thin and light, and may use a lithium-ion battery as a power source.

Examples

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.

Example 1-1

1. Preparation of battery cell

1) Preparation of positive electrode plate:

A positive electrode active material $LiNi_{0.55}Co_{0.05}Mn_{0.4}O_2$, superconducting carbon black SP as a conductive agent and polyvinylidene fluoride (PVDF) as a binder were dispersed in N-methylpyrrolidone (NMP) as a solvent in a weight ratio of 96 : 1.2 : 2.8 and mixed uniformly to obtain a positive electrode slurry; and the positive electrode slurry was evenly coated with a thickness of 49 $\mu$m onto a positive electrode current collector aluminum foil, and was subjected to drying, cold pressing, slitting and cutting, to obtain a positive electrode plate.

2) Preparation of separator:

A 10 $\mu$m polyethylene film was selected as a separator.

3) Preparation of negative electrode plate:

A boehmite slurry used in an insulation layer was prepared by the following method: respective raw materials of boehmite with a particle size of 0.5 $\mu$m, a dispersant polyvinyl alcohol, and a binder polystyrene-acrylate emulsion were taken in a weight ratio of 96.5 : 0.5 : 3; deionized water was used as a solvent, and they were added into a mixer for stirring and dispersion; and a slurry with a solid content of 45% was obtained.

A silicon suboxide slurry used in a reaction layer was prepared by the following method: respective raw materials of silicon suboxide with a particle size of 1 $\mu$m, a dispersant polyvinyl alcohol, and a binder polystyrene-acrylate emulsion were taken in a weight ratio of 96.5 : 0.5 : 3; deionized water was used as a solvent, and they were added into a mixer for stirring and dispersion; and a slurry with a solid content of 45% was obtained.

A negative electrode active material graphite, superconducting carbon black SP as a conductive agent, SBR as a binder, and CMC-Na as a thickener were dispersed in deionized water as a solvent in a weight ratio of 96 : 1 : 1 : 2 and mixed uniformly to obtain a negative electrode slurry; the negative electrode slurry was evenly coated with a thickness of 65 $\mu$m onto a negative electrode current collector copper foil; and after drying, an electrode plate having a negative electrode material layer was obtained.

Next, the position of a bending part in a first inner ring, i.e., the innermost ring, was calculated, and a boehmite coating was applied at this position from the prepared boehmite slurry, with a coating thickness of 2 $\mu$m; and then, a silicon suboxide coating was applied from the prepared silicon suboxide slurry, with a coating thickness of 27 $\mu$m, and subjected to drying, cold pressing, slitting and cutting, to obtain the negative electrode plate. Herein, the gram capacity of the reaction layer was 2350 mAh/g, and the density of the reaction layer material was 1.82 g/cm$^3$.

4) Preparation of electrolyte solution

Ethylene carbonate (EC), dimethyl carbonate (DMC), and diethyl carbonate (DEC) were mixed in a volume ratio of 1 : 1 : 1 into an organic solvent, and then the fully dried lithium salt $LiPF_6$ was dissolved in the mixed organic solvent, so as to prepare an electrolyte solution with a concentration of 1 mol/L.

5) Preparation of battery cell:

The above positive electrode plate, separator, and negative electrode plate were stacked in sequence with the separator located between the positive electrode plate and the negative electrode plate to play a role of isolation, and then winding was performed to make a cell; and then, the bare cell was placed in an outer package casing and dried, and then the electrolyte solution was injected, followed by procedures such as vacuum encapsulation, standing, forming and shaping, to obtain a battery cell.

Herein, a gap between the negative electrode material layer and the positive electrode material layer after winding, the capacity of the negative electrode material layer in the bending part, and the area of the negative electrode material layer in the bending part are shown in Table 1.

2. Performance test of battery cell

After the battery was prepared, a test for self-discharge of the battery was performed. Herein, the self-discharge of the battery is evaluated in terms of a self-discharge rate which refers to the voltage drop of the battery per hour. An internal short circuit of the battery is reflected by the self-discharge rate, where the more serious the short circuit, the greater the value of the self-discharge rate.

Specifically, at 25°C, the battery cell obtained in Example 1-1 was charged to 4.25 V with a constant current at 0.33 C, then charged to 0.05 C with a constant voltage at 4.25 V, and then discharged to 2.8 V with a constant current at 0.33 C, which was taken as one cycle. After a particular number of cycles (300 cycles, 500 cycles, and 1000 cycles, respectively, in this example), the battery was full charged to 4.25 V, and allowed to stand for 24 h for the depolarization of the battery, and after standing for 24 h, the voltage V1 of the battery was measured; and after standing for further 48 h, the voltage V2 of the battery was measured.

$$\text{Self-discharge rate of the battery (mV/h)} = (V2 - V1)/48$$

In addition, if burning or smoking occurred in the cycle process of the battery, it was determined that the battery had failed.

Example 1-2 to Example 1-9

A lithium-ion battery was prepared in the same manner as in Example 1-1, except that the thickness of the reaction layer was changed as shown in Table 1.

Comparative Example 1-1

A lithium-ion battery was prepared in the same manner as in Example 1-1, except that no insulation layer and reaction layer was provided.

Comparative Example 1-2

A lithium-ion battery was prepared in the same manner as in Example 1-1, except that no reaction layer was provided.

Comparative Example 1-3

A lithium-ion battery was prepared in the same manner as in Example 1-1, except that no insulation layer was provided.

Comparative Example 1-4

A lithium-ion battery was prepared in the same manner as in Example 1-1, except that the thickness of the reaction layer was changed as shown in Table 2.

The lithium-ion batteries obtained in the above Example 1-1 to Example 1-8 and Comparative Example 1-1 to Comparative Example 1-4 were tested for performance, and the test results were recorded together in Table 1 and Table 2.

[Table 1]

| Parameters | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|
| Thickness of negative electorde material layer $h_1$ ($\mu$m) | 65 | 65 | 65 | 65 | 65 | 65 | 65 | 65 | 65 |
| Thickness of positive electorde material layer $h_2$ ($\mu$m) | 49 | 49 | 49 | 49 | 49 | 49 | 49 | 49 | 49 |
| Thickness of separator $h_3$ ($\mu$m) | 10 | 10 | 10 | 10 | 10 | 10 | 10 | 10 | 10 |
| Gap between negative electrode material layer and positive electrode material layer x ($\mu$m) | 200 | 200 | 200 | 200 | 200 | 200 | 200 | 200 | 200 |
| Capacity of negative electrode material layer of bending part q (mAh) | 6.62 | 6.62 | 6.62 | 6.62 | 6.62 | 6.62 | 6.62 | 6.62 | 6.62 |
| Area of negative electorde material layer of bending part a (cm$^2$) | 1.69 | 1.69 | 1.69 | 1.69 | 1.69 | 1.69 | 1.69 | 1.69 | 1.69 |
| Gram capacity of reaction layer $m_1$ (mAh/g) | 2350 | 2350 | 2350 | 2350 | 2350 | 2350 | 2350 | 2350 | 2350 |
| Density of reaction layer material $\rho$ (g/cm$^3$) | 1.82 | 1.82 | 1.82 | 1.82 | 1.82 | 1.82 | 1.82 | 1.82 | 1.82 |
| Thickness of reaction laver d ($\mu$m) | 27 | 12 | 20 | 30 | 50 | 70 | 90 | 107 | 115 |
| Thickness of insulation layer ($\mu$m) | 2 | 2 | 2 | 2 | 2 | 2 | 2 | 2 | 2 |
| Self-discharge rate after 300 cycles (mV/h) | 0.228 | 0.354 | 0.231 | 0.218 | 0.194 | 0.191 | 0.187 | 0.153 | 0.153 |
| Self-discharge rate after 500 cycles (mV/h) | 0.219 | 0.465 | 0.255 | 0.243 | 0.207 | 0.204 | 0.193 | 0.167 | 0.161 |

(continued)

| Parameters | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|
| Self-discharge rate after 1000 cycles (mV/h) | 0.353 | 0.893 | 0.416 | 0.227 | 0.211 | 0.210 | 0.201 | 0.161 | 0.166 |
| Failure | No | No | No | No | No | No | No | No | No |

[Table 2]

| Parameters | Comparative Example1-1 | Comparative Example1-2 | Comparative Example1-3 | Comparative Example14 |
|---|---|---|---|---|
| Thickness of negative electorde material layer $h_1$ ($\mu$m) | 65 | 65 | 65 | 65 |
| Thickness of positive electorde material layer $h_2$ ($\mu$m) | 49 | 49 | 49 | 49 |
| Thickness of separator $h_3$ ($\mu$m) | 10 | 10 | 10 | 10 |
| Gap between negative electrode material layer and positive electrode material layer ($\mu$m) | 200 | 200 | 200 | 200 |
| Capacity of negative electorde material layer of bending part q (mAh) | 6.62 | 6.62 | 6.62 | 6.62 |
| Area of negative electorde material layer of bending part a ($cm^2$) | 1.69 | 1.69 | 1.69 | 1.69 |
| Gram capacity of reaction layer $m_1$ (mAh/g) | - | - | 2350 | 2350 |
| Density of reaction layer material $\rho$ ($g/cm^3$) | - | - | 1.82 | 1.82 |
| Thickness of reaction layer d ($\mu$m) | 0 | 0 | 27 | 5 |
| Thickness of insulation laver ($\mu$m) | 0 | 2 | 0 | 2 |
| Self-discharge rate after 300 cycles (mV/h) | 0.465 | 0.398 | 0.256 | 0.365 |
| Self-discharge rate after 500 cycles (mV/h) | 0.648 | 0.606 | 0.283 | 0.548 |
| Self-discharge rate after 1000 cycles (mV/h) | 1.16 | 1.01 | 0.358 | 0.96 |
| Failure | No | No | Capacity loss ocurrs | No |

Example 2-1 to Example 2-4 and Comparative Example 2-1 to Comparative Example 2-3

A lithium-ion battery was prepared in the same manner as in Example 1-1, except that the gap between the negative electrode material layer and the positive electrode material layer was 400 $\mu$m, and the thickness of the reaction layer was changed as shown in Table 3, or no insulation layer and/or reaction layer was provided.

The lithium-ion batteries obtained in the above Example 2-1 to Example 2-4 and Comparative Example 2-1 to Comparative Example 2-3 were tested for performance, and the test results were recorded together in Table 3.

[Table 3]

| Parameters | Example 2-1 | Example 2-2 | Example 2-3 | Example 2-4 | Comparative Example 2-1 | Comparative Example 2-2 | Comparative Example 2-3 |
|---|---|---|---|---|---|---|---|
| Thickness of negative electorde material layer $h_1$ ($\mu$m) | 65 | 65 | 65 | 65 | 65 | 65 | 65 |

(continued)

| Parameters | Example 2-1 | Example 2-2 | Example 2-3 | Example 2-4 | Comparative Example 2-1 | Comparative Example 2-2 | Comparative Example 2-3 |
|---|---|---|---|---|---|---|---|
| Thickness of positive electorde material layer $h_2$ ($\mu$m) | 49 | 49 | 49 | 49 | 49 | 49 | 49 |
| Thickness of separator $h_3$ ($\mu$m) | 10 | 10 | 10 | 10 | 10 | 10 | 10 |
| Gap between negative electrode material layer and positive electrode material layer x ($\mu$m) | 400 | 400 | 400 | 400 | 400 | 400 | 400 |
| Capacity of negative electorde material layer of bending part q (mAh) | 6.62 | 6.62 | 6.62 | 6.62 | 6.62 | 6.62 | 6.62 |
| Area of negative electorde material layer of bending part a (cm$^2$) | 1.69 | 1.69 | 1.69 | 1.69 | 1.69 | 1.69 | 1.69 |
| Gram capacity of reaction layer m1 (mAh/g) | 2350 | 2350 | 2350 | 2350 | - | - | 2350 |
| Density of reaction layer material $\rho$ (g/cm$^3$) | 1.82 | 1.82 | 1.82 | 1.82 | - | - | 1.82 |
| Thickness of reaction layer d ($\mu$m) | 55 | 40 | 100 | 135 | 0 | 0 | 55 |
| Thickness of insulation layer ($\mu$m) | 2 | 2 | 2 | 2 | 0 | 2 | 0 |
| Self-discharge rate after 300 cycles (mV/h) | 0.216 | 0.356 | 0.186 | 0.151 | 0.665 | 0.618 | 0.296 |
| Self-discharge rate after 500 cycles (mV/h) | 0.245 | 0.422 | 0.194 | 0.161 | 0.848 | 0.806 | 0.383 |

(continued)

| Parameters | Example 2-1 | Example 2-2 | Example 2-3 | Example 2-4 | Comparative Example 2-1 | Comparative Example 2-2 | Comparative Example 2-3 |
|---|---|---|---|---|---|---|---|
| Self-discharge rate after 1000 cycles (mV/h) | 0.353 | 0.853 | 0.209 | 0.156 | 1.S6 | 1.61 | 0.558 |
| Failure | No | No | No | No | No | No | Capacity loss ocurrs |

Example 3-1 to Example 3-9

A lithium-ion battery was prepared in the same manner as in Example 1-1, except that the materials of the reaction layer and/or the insulation layer were changed as shown in Table 4.

The lithium-ion batteries obtained in the above Example 3-1 to Example 3-9 were tested for performance, and the test results were recorded together in Table 4.

[Table 4]

| Parameters | Example3-1 | Example3-2 | Example3-3 | Example3-4 | Example3-5 | Example3-6 | Example3-7 | Example3-8 | Example3-9 |
|---|---|---|---|---|---|---|---|---|---|
| Thickness of negative electrode material layer $h_1$ (μm) | 65 | 65 | 65 | 65 | 65 | 65 | 65 | 65 | 65 |
| Thickness of positive electrode material layer $h_2$ (μm) | 49 | 49 | 49 | 49 | 49 | 49 | 49 | 49 | 49 |
| Thickness of separator $h_3$ (μm) | 10 | 10 | 10 | 10 | 10 | 10 | 10 | 10 | 10 |
| Gap between negative electrode material layer and positive electrode material layer x (μm) | 200 | 200 | 200 | 200 | 200 | 200 | 200 | 200 | 200 |
| Capacity of negative electrode material layer of bending part q (mAh) | 6.62 | 6.62 | 6.62 | 6.62 | 6.62 | 6.62 | 6.62 | 6.62 | 6.62 |
| Area of negative electrode material layer of bending part a (cm²) | 1.69 | 1.69 | 1.69 | 1.69 | 1.69 | 1.69 | 1.69 | 1.69 | 1.69 |
| Material of reaction layer | Silicon suboxide | Graphite | Silicon | Silicon suboxide | Graphite | Silicon | Silicon suboxide | Graphite | Silicon |
| Gram capacity of reaction layer m1 (mAh/g) | 2350 | 350 | 3800 | 2350 | 350 | 3800 | 2350 | 350 | 3800 |
| Density of reaction layer material ρ (g/cm³) | 1.82 | 1.79 | 1.8 | 1.82 | 1.79 | 1.8 | 1.82 | 1.79 | 1.8 |
| Thickness of reaction layer d (μm) | 27 | 186 | 17.1 | 27 | 186 | 17.1 | 27 | 186 | 17.1 |
| Material of insulation layer | Boehmite | Boehmite | Boehmite | Aluminium oxide | Aluminium oxide | Aluminium oxide | Zirconium oxide | Zirconium oxide | Zirconium oxide |
| Thickness of insulation layer (μm) | 2 | 2 | 2 | 2 | 2 | 2 | 2 | 2 | 2 |

(continued)

| Parameters | Example3-1 | Example3-2 | Example3-3 | Example3-4 | Example3-5 | Example3-6 | Example3-7 | Example3-8 | Example3-9 |
|---|---|---|---|---|---|---|---|---|---|
| Self-discharge rate after 300 cycles (mV/h) | 0228 | 0.227 | 0.228 | 0.228 | 0.228 | 0.228 | 0.228 | 0.228 | 0.228 |
| Self-discharge rate after 500 cycles (mV/h) | 0.229 | 0.228 | 0.229 | 0.229 | 0.229 | 0.229 | 0.229 | 0.229 | 0.229 |
| Self-discharge rate after 1000 cycles (mV/h) | 0.353 | 0.353 | 0.353 | 0.353 | 0.353 | 0.353 | 0.353 | 0.353 | 0.353 |
| Failure | No | No | No | No | No | No | No | No | No |

Example 4-1 to Example 4-5

A lithium-ion battery was prepared in the same manner as in Example 1-1, except that the thickness of the insulation layer was changed as shown in Table 5.

The lithium-ion batteries obtained in the above Example 4-1 to Example 4-5 were tested for performance, and the test results were recorded together in Table 5.

[Table 5]

| Parameters | Example 4-1 | Example 4-2 | Example 4-3 | Example 4-4 | Example 4-5 |
|---|---|---|---|---|---|
| Thickness of negative electorde material layer $h_1$ ($\mu$m) | 65 | 65 | 65 | 65 | 65 |
| Thickness of positive electorde material layer $h_2$ ($\mu$m) | 49 | 49 | 49 | 49 | 49 |
| Thickness of separator $h_3$ ($\mu$m) | 10 | 10 | 10 | 10 | 10 |
| Gap between negative electrode material layer and positive electrode material layer x ($\mu$m) | 200 | 200 | 200 | 200 | 200 |
| Capacity of negative electorde material layer of bending part q (mAh) | 6.62 | 6.62 | 6.62 | 6.62 | 6.62 |
| Area of negative electorde material layer of bending part a (cm$^2$) | 1.69 | 1.69 | 1.69 | 1.69 | 1.69 |
| Gram capacity of reaction layer $m_1$ (mAh/g) | 2350 | 2350 | 2350 | 2350 | 2350 |
| Density of reaction layer material $\rho$ (g/cm$^3$) | 1.82 | 1.82 | 1.82 | 1.82 | 1.82 |
| Thickness of reaction layer d ($\mu$m) | 27 | 27 | 27 | 27 | 27 |
| Thickness of insulation layer ($\mu$m) | 2 | 1 | 4 | 7 | 10 |
| Self-discharge rate after 300 cycles (mV/h) | 0.228 | 0.248 | 0.228 | 0.227 | 0.213 |
| Self-discharge rate after 500 cycles (mV/h) | 0.219 | 0.229 | 0.237 | 0.234 | 0.216 |
| Self-discharge rate after 1000 cycles (mV/h) | 0.353 | 0.383 | 0.332 | 0.351 | 0.313 |
| Failure | No | No | No | No | No |

Example 5-1 to Example 5-3 and Comparative Example 5

In Example 5-1, a lithium-ion battery was prepared in the same manner as in Example 1-1, except that an insulation layer and a reaction layer were provided at each of a first bending part (labeled as bending part 1 in Table 6), a second bending part (labeled as bending part 2 in Table 6), and a third bending part (labeled as bending part 3 in Table 6), counted from the inner ring, and that the gap between the negative electrode material layer and the positive electrode material layer was set as recorded in Table 6.

In Example 5-2, a lithium-ion battery was prepared in the same manner as in Example 5-1, except that an insulation layer and a reaction layer were provided at each of a first bending part and a second bending part.

In Example 5-3, a lithium-ion battery was prepared in the same manner as in Example 5-1, except that an insulation layer and a reaction layer were provided at only a first bending part.

In Comparative Example 5, a lithium-ion battery was prepared in the same manner as in Example 5-1, except that no insulation layer and reaction layer was provided.

The lithium-ion batteries obtained in the above Example 5-1 to Example 5-3 and Comparative Example 5 were tested for performance, and the test results were recorded together in Table 6.

[Table 6]

| Parameters | Example 5-1 | | | Example 5-2 | | | Example 5-3 | | | Comparative Example 5 | | |
|---|---|---|---|---|---|---|---|---|---|---|---|---|
| | Bending part 1 | Bending part 2 | Bending part 3 | Bending part 1 | Bending part 2 | Bending part 3 | Bending part 1 | Bending part 2 | Bending part 3 | Bending part 1 | Bending part 2 | Bending part 3 |
| Thickness of negative electorde material layer $h_1$ ($\mu$m) | 65 | 65 | 65 | 65 | 65 | 65 | 65 | 65 | 65 | 65 | 65 | 65 |
| Thickness of positive electorde material layer $h_2$ ($\mu$m) | 49 | 49 | 49 | 49 | 49 | 49 | 49 | 49 | 49 | 49 | 49 | 49 |
| Thickness of separator $h_3$ ($\mu$m) | 10 | 10 | 10 | 10 | 10 | 10 | 10 | 10 | 10 | 10 | 10 | 10 |
| Gap between negative electrode material layer and positive electrode material layer x ($\mu$m) | 600 | 200 | 50 | 600 | 200 | 50 | 600 | 200 | 50 | 600 | 200 | 50 |
| Capacity of negative electorde material layer of bending part q (mAh) | 6.62 | 6.62 | 6.62 | 6.62 | 6.62 | 6,62 | 6.62 | 6.62 | 6.62 | 6.62 | 6.62 | 6,62 |
| Area of negative electorde material layer of bending part a ($cm^2$) | 1.69 | 1.69 | 1.69 | 1.69 | 1.69 | 1,69 | 1.69 | 1.69 | 1.69 | 1.69 | 1.69 | 1.69 |
| Gram capacity of reaction layer m1 (mAh/g) | 2350 | - | - | 2350 | 2350 | - | 2350 | 2350 | 2350 | - | - | - |
| Density of reaction layer material $\rho$ ($g/cm^3$) | 1.82 | - | - | 1.82 | 1.S2 | - | 1.82 | 1.82 | 1.82 | - | - | - |
| Thickness of reaction layer d ($\mu$m) | 83 | - | - | 83 | 27 | - | 83 | 27 | 7 | - | - | - |
| Thickness of insulation layer ($\mu$m) | 2 | - | - | 2 | 2 | - | 2 | 2 | 2 | - | - | - |
| Self-discharge rate after 300 cycles (mV/h) | 0.689 | | | 0.445 | | | 0.22S | | | 0.973 | | |

| Parameters | Example 5-1 | | | Example 5-2 | | | Example 5-3 | | | Comparative Example 5 | | |
|---|---|---|---|---|---|---|---|---|---|---|---|---|
| | Bending part 1 | Bending part 2 | Bending part 3 | Bending part 1 | Bending part 2 | Bending part 3 | Bending part 1 | Bending part 2 | Bending part 3 | Bending part 1 | Bending part 2 | Bending part 3 |
| Self-discharge rate after 500 cycles (mV/h) | 0.735 | | | 0.535 | | | 0.254 | | | 1.938 | | |
| Self-discharge rate after 1000 cycles (mV/h) | 1.199 | | | 0.829 | | | 0.372 | | | - | | |
| Failure | No | | | No | | | No | | | Failed after 846 cycles | | |

Test Example 1 and Comparative Test Example 1

Lithium-ion batteries in Test Example 1 and Comparative Test Example 1 were respectively prepared according to the preparation methods in the above Example 1-1 and Comparative Example 1-1, and after 500 cycles under the conditions of performance test, lithium dendrites at the bending part were observed with a scanning electron microscope.
As shown in Fig. 9A, only a small amount of lithium dendrites occur at the bending part of the lithium-ion battery in Test Example 1, and as shown in Fig. 9B, a large amount of lithium dendrites occur at the bending part of the lithium-ion battery in Comparative Test Example 1.

Test Example 2

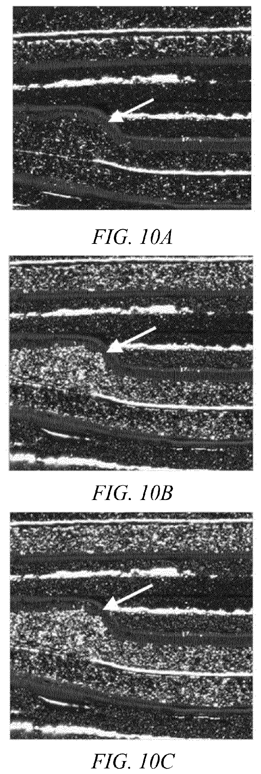

A lithium-ion battery in Test Example 2 was prepared according to the preparation method in the above Example 1-1, the charge-discharge cycle was carried out under the conditions of performance test, and after 1, 10, and 100 cycles, respectively, the production of lithium dendrites was observed using an in-situ microscope.
As shown by arrows in Fig. 10A to Fig. 10C, once the lithium dendrites pass through the insulation layer, the dendrites no longer continue to grow and the color of the reaction layer changes. Thus, it can be seen that the lithium dendrites reacts with the reaction layer.
It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

**Claims**

1. A lithium-ion battery, comprising:

    a wound structure formed by winding a negative electrode plate, a separator and a positive electrode plate in a winding direction, the wound structure comprising an arc-shaped bending part,
    wherein the negative electrode plate comprises a negative electrode material layer, and an insulation layer and a reaction layer located on a surface of the insulation layer are provided on a surface of the negative electrode material layer in the bending part, the reaction layer comprising a lithium storage material.

2. The lithium-ion battery according to claim 1, wherein:

    the thickness d of the reaction layer satisfies that:

$$q \times \frac{(x + h_2 + h_3) - h_1}{h_1 \times m_1 \times \rho \times a} \times 10000 - 15 \leq d$$

,

    preferably, the thickness d of the reaction layer satisfies that:

$$q \times \frac{(x + h_2 + h_3) - h_1}{h_1 \times m_1 \times \rho \times a} \times 10000 - 10 \leq d$$

,

    and more preferably, the thickness d of the reaction layer satisfies that:

$$q \times \frac{(x + h_2 + h_3) - h_1}{h_1 \times m_1 \times \rho \times a} \times 10000 - 10 \le d$$

$$\le q \times \frac{(x + h_2 + h_3) - h_1}{h_1 \times m_1 \times \rho \times a} \times 10000 + 80 \quad,$$

where, $h_1$: the thickness of a single layer of the negative electrode material layer, in $\mu$m;
$h_2$: the thickness of a single layer of the positive electrode material layer, in $\mu$m;
$h_3$: the thickness of the separator, in $\mu$m;
x: the distance between the negative electrode material layer and the positive electrode material layer in the bending part, in $\mu$m;
q: the capacity of a single layer of the negative electrode active material layer in the bending part, in mAh;
a: the area of a single layer of the negative electrode active material layer in the bending part, in cm$^2$;
$m_1$: the gram capacity of the reaction layer, in mAh/g;
$\rho$: the density of the reaction layer, in g/cm$^3$;
d: in $\mu$m.

3. The lithium-ion battery according to claim 1 or 2, wherein:
the lithium storage material comprises at least one of graphite, elemental silicon, silicon oxide, silicon suboxide, tin oxide, copper oxide and zinc oxide.

4. The lithium-ion battery according to any one of claims 1 to 3, wherein:
the insulation layer comprises at least one of aluminum oxide, boehmite, zirconium oxide, titanium oxide, magnesium oxide, lithium oxide, silicon oxide, cobalt oxide, nickel oxide, zinc oxide, gallium oxide, germanium oxide, yttrium oxide, strontium oxide, barium oxide, and molybdenum oxide.

5. The lithium-ion battery according to any one of claims 1 to 4, wherein:
the thickness of the insulation layer is 1 to 10 $\mu$m, and preferably, 2 to 4 $\mu$m.

6. The lithium-ion battery according to any one of claims 1 to 5, wherein:
the Young's modulus of the insulation layer is greater than or equal to 6 GPa, and preferably, 6 to 30 GPa.

7. The lithium-ion battery according to any one of claims 1 to 6, wherein:
the gram capacity of the reaction layer is 300 to 5000 mAh/g, and preferably, 1000 to 4000 mAh/g.

8. The lithium-ion battery according to any one of claims 1 to 7, wherein:

the particle size of the reaction layer is 0.1 to 6 $\mu$m, and preferably, 0.1 to 2 $\mu$m, and
the particle size of the insulation layer is 0.1 to 10 $\mu$m, and preferably, 0.1 to 4 $\mu$m.

9. A battery module, comprising:
the lithium-ion battery according to any one of claims 1 to 8.

10. A battery pack, comprising:
the battery module according to claim 9.

11. A power consuming device, comprising:
at least one selected from the lithium-ion battery according to any one of claims 1 to 8, the battery module according to claim 9 or the battery pack according to claim 10.

106

102

104

101

103

*FIG. 1*

106
102  101
104
103

x

*FIG. 2*

5

*FIG. 3*

FIG. 4

FIG. 5

FIG. 6

FIG. 7

FIG. 8

FIG. 9A

FIG. 9B

*FIG. 10A*

*FIG. 10B*

*FIG. 10C*

## INTERNATIONAL SEARCH REPORT

| | International application No. |
|---|---|
| | **PCT/CN2021/123970** |

**A. CLASSIFICATION OF SUBJECT MATTER**

H01M 10/0587(2010.01)i; H01M 10/04(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 锂, 负极, 阳极, 绝缘, 阻挡, 氧化铝, 勃姆石, 氧化锆, 氧化钛, 氧化镁, 氧化锂, 氧化硅, 氧化钴, 氧化镍, 氧化锌, 氧化镓, 氧化锗, 氧化钇, 氧化锶, 氧化钡, 氧化钼, Al2O3, mgo, sio2, zno, aluminum, magnesium, zinc, silicon, copper, oxide, 储锂, 贮锂, 石墨, 单质硅, 氧化亚硅, 氧化锡, 氧化铜, graphite, si, cuo, zno, 层, layer, lithium, anode, negative, battery, cell, insulat+

**C. DOCUMENTS CONSIDERED TO BE RELEVANT**

| Category* | Citation of document, with indication, where appropriate, of the relevant passages | Relevant to claim No. |
|---|---|---|
| Y | CN 212810367 U (NINGDE CONTEMPORARY AMPEREX TECHNOLOGY CO., LTD.) 26 March 2021 (2021-03-26) description, paragraphs 0009-0011, 0074-0075, 0096 and 0199-0201 | 1, 3-11 |
| Y | CN 108242530 A (BEIJING HAWAGA POWER STORAGE TECHNOLOGY CO., LTD.) 03 July 2018 (2018-07-03) description, paragraphs 0005-0009 | 1, 3-11 |
| Y | CN 205992575 U (CHINA AVIATION LITHIUM BATTERY (LUOYANG) CO., LTD.) 01 March 2017 (2017-03-01) description, paragraphs 0005-0022 | 1, 3-11 |
| A | JP 2014150074 A (HITACHI AUTOMOTIVE SYSTEMS LTD.) 21 August 2014 (2014-08-21) entire document | 1-11 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 June 2022** | **23 June 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/123970**

| Patent document cited in search report | | | Publication date (day/month/year) | Patent family member(s) | | | Publication date (day/month/year) |
|---|---|---|---|---|---|---|---|
| CN | 212810367 | U | 26 March 2021 | None | | | |
| CN | 108242530 | A | 03 July 2018 | None | | | |
| CN | 205992575 | U | 01 March 2017 | WO | 2017152836 | A1 | 14 September 2017 |
| | | | | CN | 107171018 | A | 15 September 2017 |
| | | | | CN | 107681114 | A | 09 February 2018 |
| | | | | CN | 107681115 | A | 09 February 2018 |
| | | | | CN | 108242530 | A | 03 July 2018 |
| | | | | CN | 108346757 | A | 31 July 2018 |
| | | | | CN | 108346771 | A | 31 July 2018 |
| | | | | CN | 108346804 | A | 31 July 2018 |
| | | | | US | 2019088981 | A1 | 21 March 2019 |
| JP | 2014150074 | A | 21 August 2014 | None | | | |